(19) Europäisches Patentamt
European Patent Office
Office européen des brevets

(11) **EP 3 314 690 B1**

(12) **FASCICULE DE BREVET EUROPEEN**

(45) Date de publication et mention
de la délivrance du brevet:
**28.04.2021 Bulletin 2021/17**

(21) Numéro de dépôt: **16733397.0**

(22) Date de dépôt: **23.06.2016**

(51) Int Cl.:
***H01M 10/60*** *(2014.01)*

(86) Numéro de dépôt international:
**PCT/EP2016/064552**

(87) Numéro de publication internationale:
**WO 2016/207287 (29.12.2016 Gazette 2016/52)**

(54) **DISPOSITIF DE CHAUFFAGE D'UNE BATTERIE**

BATTERIENHEIZUNG

BATTERY HEATER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.06.2015 FR 1555778**

(43) Date de publication de la demande:
**02.05.2018 Bulletin 2018/18**

(73) Titulaire: **Renault S.A.S.**
**92100 Boulogne-Billancourt (FR)**

(72) Inventeurs:
• **DEYDIER, Alexandre**
**38000 Grenoble (FR)**
• **LALLICH, Sylvain**
**38250 Lans En Vercors (FR)**
• **MINVIELLE, Zoé**
**38000 Grenoble (FR)**
• **PRA, Franck**
**38450 Le Gua (FR)**

(74) Mandataire: **Urbillac, Chantal Corinne Annie et al**
**RENAULT s.a.s.**
**Sce 00267 - TCR GRA 2 36**
**1 avenue du Golf**
**78084 Guyancourt Cedex (FR)**

(56) Documents cités:
**EP-A2- 1 975 219        WO-A2-2011/054676**
**DE-A1-102012 012 820   FR-A1- 2 505 992**
**JP-A- H0 822 845        JP-A- 2009 054 404**
**US-A- 4 713 944         US-B2- 7 147 071**

• **YATE DING ET AL.: "THERMOCHEMICAL ENERGY STORAGE TECHNOLOGIES FOR BUILDING APPLICATIONS: A STATE-OF-THE-ART REVIEW", INT.J.LOW-CARBON TECH., 29 février 2012 (2012-02-29), pages 106-116, XP002746737, DOI: 10.1093/ijlct/cts004**

EP 3 314 690 B1

**Description**

La présente invention concerne le chauffage d'une batterie comprenant au moins un accumulateur, plus précisément un dispositif de chauffage d'une batterie comprenant au moins un accumulateur métal-ion, par exemple Li-ion, installée sur un véhicule automobile, en particulier possédant une chaine de traction hybride ou électrique.

Les accumulateurs Li-ion renferment des cellules électrochimiques dont la plage de température de fonctionnement optimale est limitée.

Si la température est trop élevée, typiquement supérieure à 45°C, la cellule électrochimique vieillit prématurément. A l'inverse, si la température est trop basse, la résistance interne des cellules électrochimiques augmente fortement.

Par ailleurs, afin de limiter la formation de dépôt de lithium, sous la forme de dendrites de lithium pouvant percer le séparateur provoquant alors un court-circuit, la puissance extractible de la batterie Li-ion est limitée. Une procédure de chauffage de ladite batterie est également appliquée.

Cependant, l'inertie thermique d'une batterie Li-ion est très importante. Le chauffage d'une batterie Li-ion nécessite donc la consommation d'une énergie considérable entrainant une limitation du fonctionnement du véhicule électrique ou hydride sur lequel est installée une batterie Li-ion.

Aujourd'hui, des systèmes de chauffage d'une batterie, par exemple Li-ion, peu énergivores sont recherchés afin d'utiliser ladite batterie le plus rapidement possible et au maximum de sa capacité.

Depuis plusieurs dizaines d'années, des systèmes de chauffage et de refroidissement reposant sur la mise en œuvre de réactions thermochimiques sont exploités. Ainsi, le brevet EP 0 206 875 décrit un transformateur électrochimique pour le stockage et le déstockage de la chaleur comprenant deux réacteurs, lesdits réacteurs étant reliés entre eux par une tubulure de communication de façon à définir une enceinte fermée. Chacun des réacteurs comporte au moins un réactif susceptible de donner lieu à une réaction exothermique réversible lorsqu'il est en présence d'un gaz.

Le brevet US 5,964,097 concerne un dispositif pour produire de la chaleur et du froid par des réactions chimiques, comprenant deux réacteurs. Chacun des réacteurs comporte un sel susceptible de réagir chimiquement avec un gaz.

Le brevet CA 2815334 divulgue quant à lui un système thermochimique comportant un réacteur, ou enceinte de stockage d'un produit réactif apte à absorber un gaz, qui est admis dans le réacteur par un diffuseur, le produit réactif et le gaz étant tels que, lorsqu'ils sont mis en présence l'un de l'autre, ils sont l'objet d'une réaction ayant pour effet l'absorption du gaz par le produit réactif et, à l'inverse, ils sont l'objet d'une réaction de désorption du gaz absorbé par le produit réactif sous l'effet d'un chauffage appliqué à ce dernier après absorption du gaz.

Ainsi, ces brevets divulguent des systèmes de chauffage reposant sur le principe de réactions thermochimiques exothermiques, destinés à des applications notamment domestiques comme les pompes à chaleur.

Le brevet US 7,147,071 décrit un système de management thermique pour un véhicule hybride comprenant un échangeur de chaleur qui comporte un système de stockage d'énergie thermique. Le véhicule hydride peut comprendre une batterie, par exemple Li-ion. Selon un mode de réalisation préféré, l'échangeur de chaleur comprend au moins un matériau à changement de phase. Le changement de phase du matériau est exothermique, représentant ainsi une source de chaleur.

Cette installation permet de réchauffer une batterie sur la base de l'utilisation de l'enthalpie de changement de phase comme source de chaleur. Par conséquent, cela implique une très forte isolation thermique de l'échangeur renfermant le matériau à changement de phase pour maintenir une température du matériau supérieure à la température du changement de phase. Quoiqu'il en soit, la période de stockage de l'énergie dans le matériau à changement de phase est forcément limitée en raison des pertes thermiques vers l'extérieur.

Ainsi, il serait avantageux de fournir un système de chauffage d'une batterie, comprenant au moins un accumulateur métal-ion, faiblement énergivore et permettant une utilisation rapide de ladite batterie et dont l'utilisation dans le temps ne soit pas limitée par les pertes thermiques.

L'invention a donc pour objet un dispositif de chauffage d'une batterie, destiné à être installé sur un véhicule automobile, comprenant au moins un accumulateur métal-ion, comprenant :

- ladite batterie ;
- au moins un réacteur ;
- au moins un circuit transportant un fluide caloporteur,

ledit circuit comportant une première partie traversant le réacteur apte à réaliser un échange thermique avec ledit circuit, et une seconde partie apte à réaliser un échange thermique avec ladite batterie, ledit réacteur comportant un premier réactif choisi parmi MgO, CaO, BaO, CoO, $N_2$, $SO_2$, CO et Mg, apte à réagir avec un second réactif selon une réaction thermochimique exothermique.

Le dispositif de chauffage selon l'invention comprend au moins un réacteur comportant un premier réactif apte à réagir avec un second réactif selon une réaction thermochimique.

Le second réactif est avantageusement présent initialement dans le réacteur.

Selon un mode de réalisation particulier de l'invention, l'accumulateur métal-ion est un accumulateur Li-ion.

De manière préférée, la réaction thermochimique est la réaction inverse d'une réaction choisie parmi la dissociation catalytique, la déshydratation d'hydroxyde, la décarbonatation de carbonate, la réaction de réduction, le réformage de la vapeur et la déshydrogénation d'hydrure métallique.

Le premier réactif est choisi parmi MgO, CaO, BaO, CoO, $N_2$, $SO_2$, CO et Mg, de préférence gO, CaO, BaO, CoO et Mg, de préférence encore MgO.

De préférence, le second réactif est choisi parmi $H_2O$, $CO_2$, $O_2$ et $H_2$, de préférence $H_2O$, $CO_2$, $O_2$, de préférence encore $H_2O$.

Selon un mode de réalisation particulier de l'invention, la réaction thermochimique est l'hydratation de l'oxyde de magnésium pour donner de l'hydroxyde de magnésium.

Ainsi, de l'eau sous forme liquide est avantageusement mise en contact avec l'oxyde de magnésium par l'intermédiaire d'une vanne commandée. Ladite vanne s'ouvre et, par gravité, l'eau tombe sur l'oxyde de magnésium.

De manière préférée, le réacteur comprend au moins un échangeur de chaleur.

Avantageusement, ledit réacteur comprend au moins un moyen de chauffage. De manière particulièrement avantageuse, le moyen de chauffage est un dispositif de chauffe électrique. Ce dispositif de chauffe électrique permet avantageusement de régénérer le premier réactif et le second réactif lorsque le véhicule est en charge. La réaction thermochimique est alors avantageusement réversible, c'est-à-dire que ladite réaction est une réaction qui résulte en un mélange d'équilibre de réactifs et de produits.

Ainsi, en présence de chaleur, l'hydroxyde de magnésium peut se transformer pour donner de l'oxyde de magnésium et de l'eau, les réactifs initiaux étant ainsi régénérés.

De préférence, le dispositif selon l'invention comporte en outre une pompe apte à mettre en mouvement le fluide caloporteur. Le fluide caloporteur peut être de l'eau glycolée.

Selon un mode de réalisation particulier de l'invention, le circuit comporte une troisième partie pour le chauffage d'un habitacle de véhicule automobile.

Avantageusement, le dispositif de chauffage selon l'invention comprend également plusieurs vannes trois voies et plusieurs vannes d'arrêt permettant de diriger le fluide caloporteur soit vers la batterie soit vers l'habitacle soit vers les deux, en fonction du besoin.

Le dispositif de chauffage selon l'invention est destiné à être installé sur un véhicule automobile.

D'autres avantages et caractéristiques de l'invention apparaitront plus clairement à l'examen de la description détaillée et des dessins annexés sur lesquels :

- la figure 1 illustre schématiquement un exemple de réalisation d'un dispositif de chauffage selon l'invention ;
- la figure 2 représente un premier circuit de circulation du fluide caloporteur pour le chauffage d'une batterie Li-ion ;
- la figure 3 représente un second circuit de circulation du fluide caloporteur pour le chauffage d'un habitacle d'un véhicule automobile ;
- la figure 4 représente un troisième circuit de circulation du fluide caloporteur pour à la fois le chauffage d'une batterie Li-ion et d'un habitacle d'un véhicule automobile ;
- la figure 5 représente un quatrième circuit de circulation lorsque le circuit fonctionne en circuit fermé.

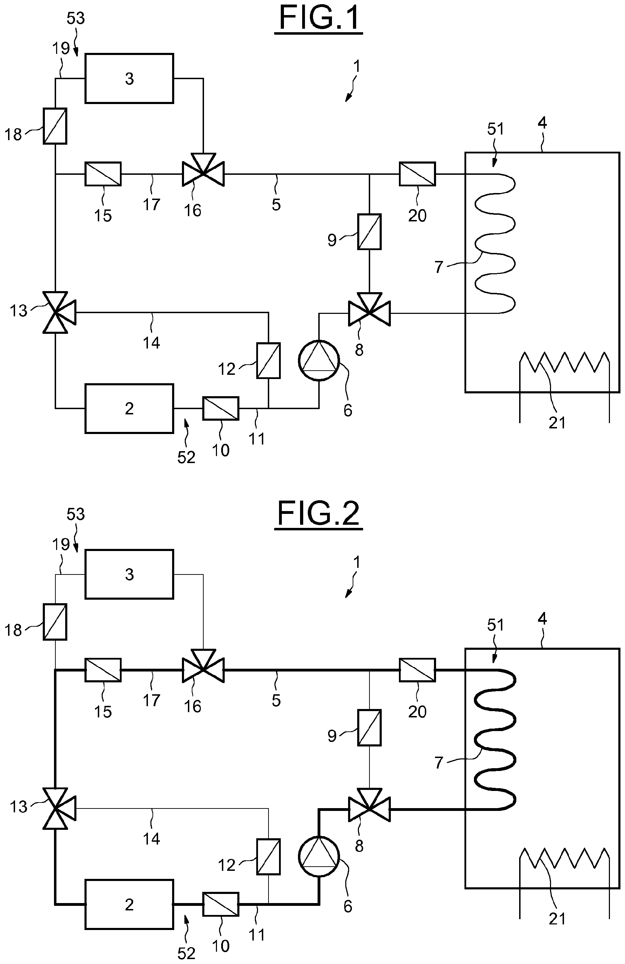

Sur la figure 1 est illustré schématiquement un dispositif 1 de chauffage associé à une batterie Li-ion 2 d'une part et à un habitacle 3 d'un véhicule automobile d'autre part.

Le dispositif 1 comprend un réacteur 4 et un circuit caloporteur 5. Le réacteur 4 est disposé dans le véhicule automobile loin de la batterie 2 pour éviter toute interaction entre les deux systèmes.

Le circuit caloporteur 5 transporte un fluide caloporteur, tel que de l'eau glycolée, mis en mouvement par une pompe 6 montée sur le circuit caloporteur 5.

Le circuit caloporteur 5 comporte une première partie 51 traversant le réacteur 4 et doté d'un échangeur de chaleur 7 s'étendant à l'intérieur du réacteur 4. L'échangeur de chaleur 7 permet ainsi un échange thermique entre le fluide caloporteur circulant dans le circuit caloporteur 5 et le réacteur 4, notamment lorsqu'une réaction thermochimique exothermique a lieu au sein du réacteur 4, comme par exemple la réaction d'hydratation de l'oxyde de magnésium.

Le circuit caloporteur 5 comporte une seconde partie 52 traversant ou entourant la batterie 2 permettant ainsi un échange thermique entre le fluide caloporteur et la batterie 2. Selon un autre mode de réalisation non représenté, le circuit caloporteur 5 peut comprendre un échangeur air/eau associé à la batterie 2 de manière à générer un flux d'air chaud à travers la batterie 2 pour le chauffage de cette dernière notamment avant le démarrage du véhicule automobile.

Le circuit caloporteur 5 comporte une troisième partie 53 traversant l'habitacle 3 de sorte que le fluide caloporteur du circuit 5 soit en relation d'échange thermique avec un dispositif de ventilation, non représenté, apte à délivrer un souffle d'air chaud dans l'habitacle 3.

Le circuit caloporteur 5 comprend un ensemble de vannes et de conduits permettant de former :

EP 3 314 690 B1

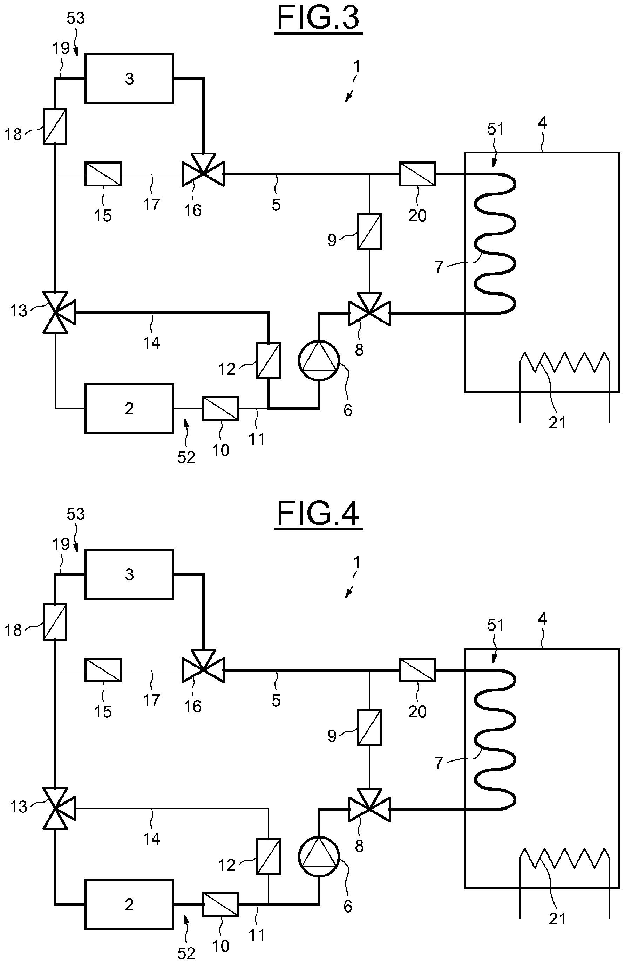

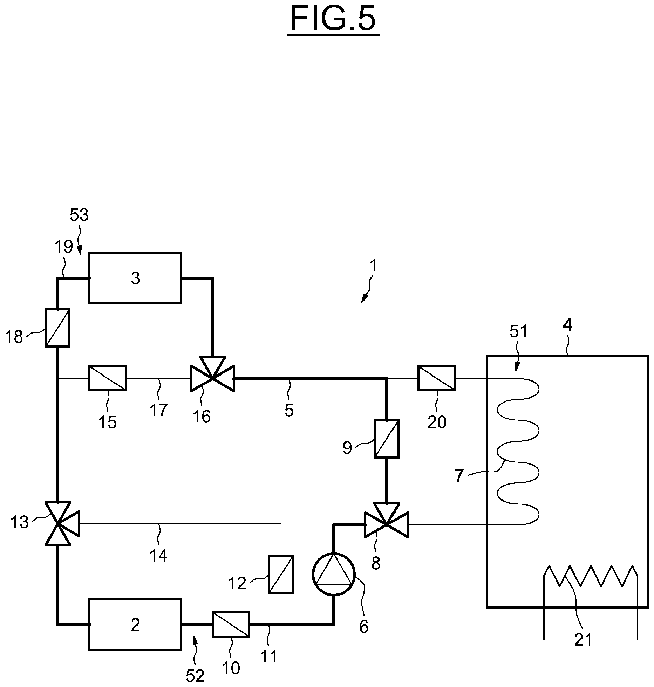

- un premier circuit de circulation du fluide caloporteur pour le chauffage de la batterie, comme illustré sur la figure 2 ;
- un deuxième circuit de circulation du fluide caloporteur pour le chauffage de l'habitacle, comme illustré sur la figure 3 ;
- un troisième circuit de circulation du fluide caloporteur pour à la fois le chauffage de la batterie et de l'habitacle, comme illustré sur la figure 4 ;
- un quatrième circuit de circulation du fluide caloporteur, lorsque le circuit fonctionne en circuit fermé, comme illustré sur la figure 5.

Le circuit caloporteur 5 comprend une première vanne trois voies 8 couplée au réacteur 4, à la pompe 6 et à une première vanne d'arrêt 9.

Le circuit caloporteur 5 comprend une deuxième vanne d'arrêt 10 couplée à la pompe 6 et à la batterie 2 via un conduit 11 de sorte que, lorsque la vanne d'arrêt 10 est ouverte, le fluide caloporteur circule dans le conduit 11 traversant la batterie 2.

Le circuit caloporteur 5 comprend également une troisième vanne d'arrêt 12 couplée à la pompe 6 et à une deuxième vanne trois voies 13 via un conduit de dérivation 14. Ainsi, lorsque la deuxième vanne d'arrêt 10 est fermée et la troisième vanne d'arrêt 12 est ouverte, le fluide caloporteur circule dans le conduit de dérivation 14, et la batterie 2 n'est plus chauffée.

En plus d'être reliée à la troisième vanne d'arrêt 12, la deuxième vanne trois voies 13 est également couplée au conduit 11 en aval de la deuxième vanne d'arrêt 10 et de la batterie 2 ainsi qu'à une quatrième vanne d'arrêt 15.

La quatrième vanne d'arrêt 15 est raccordée entre la deuxième vanne trois voies 13 et une troisième vanne trois voies 16 via un conduit de retour 17.

Le circuit caloporteur 5 comprend également une cinquième vanne d'arrêt 18 couplée à la vanne trois voies 13, à la vanne d'arrêt 15 et à l'habitacle 3. La vanne d'arrêt 18 est couplée à l'habitacle via un conduit 19 de sorte que, lorsqu'elle est ouverte, le fluide caloporteur circule dans le conduit 19 en relation d'échange thermique avec un dispositif de ventilation, non représenté, apte à délivrer un souffle d'air chaud dans l'habitacle 3.

Inversement, lorsque la quatrième vanne d'arrêt 18 est fermée et la cinquième vanne d'arrêt 15 est ouverte, le fluide caloporteur circule dans le conduit 17, et l'habitacle 3 n'est plus chauffé.

En plus d'être couplée à la vanne d'arrêt 15, la vanne trois voies 16 est couplée au conduit 19 en aval de la cinquième vanne d'arrêt 18 et de l'habitacle 3 ainsi qu'à la vanne d'arrêt 9.

Le circuit caloporteur 5 comprend également une sixième vanne d'arrêt 20 couplée à la vanne trois voies 16, au réacteur 4 et à la vanne d'arrêt 9. Ainsi, lorsque la vanne d'arrêt 9 est fermée et la vanne d'arrêt 20 est ouverte, le fluide circule à travers le réacteur 4. Inversement, lorsque la vanne d'arrêt 20 est fermée et la vanne d'arrêt 9 est ouverte, le fluide caloporteur est transporté dans le circuit caloporteur 5 en circuit fermé.

Le réacteur 4 comprend également un dispositif 21 de chauffe électrique commandée permettant ainsi de régénérer le premier réactif et le second réactif, comme par exemple l'oxyde de magnésium et l'eau.

La figure 2 illustre un premier circuit de circulation du fluide caloporteur pour le chauffage de la batterie 2.

Afin que le fluide caloporteur emprunte ledit premier circuit, la vanne d'arrêt 20 est ouverte, la vanne d'arrêt 9 est fermée, la vanne d'arrêt 10 est ouverte, la vanne d'arrêt 12 est fermée, la vanne d'arrêt 15 est ouverte et la vanne d'arrêt 18 est fermée.

La figure 3 illustre un deuxième circuit de circulation du fluide caloporteur pour le chauffage de l'habitacle 3.

Afin que le fluide caloporteur emprunte ledit deuxième circuit, la vanne d'arrêt 20 est ouverte, la vanne d'arrêt 9 est fermée, la vanne d'arrêt 10 est fermée, la vanne d'arrêt 12 est ouverte, la vanne d'arrêt 15 est fermée et la vanne d'arrêt 18 est ouverte.

La figure 4 illustre un troisième circuit de circulation du fluide caloporteur pour le chauffage de la batterie 2 et de l'habitacle 3.

Afin que le fluide caloporteur emprunte ledit troisième circuit, la vanne d'arrêt 20 est ouverte, la vanne d'arrêt 9 est fermée, la vanne d'arrêt 10 est ouverte, la vanne d'arrêt 12 est fermée, la vanne d'arrêt 15 est fermée et la vanne d'arrêt 18 est ouverte.

La figure 5 illustre un quatrième circuit de circulation du fluide caloporteur lorsque le circuit caloporteur 5 fonctionne en circuit fermé.

Afin que le fluide caloporteur emprunte ledit quatrième circuit, la vanne d'arrêt 20 est fermée, la vanne d'arrêt 9 est ouverte, la vanne d'arrêt 10 est ouverte, la vanne d'arrêt 12 est fermée, la vanne d'arrêt 15 est fermée et la vanne d'arrêt 18 est ouverte.

La présente invention est illustrée de manière non-limitative par l'exemple suivant.

EXEMPLE

Cet exemple vise à déterminer les caractéristiques du dispositif de chauffage permettant de chauffer un pack batterie de 10°C en un temps de 10 minutes.

**Caractéristiques du pack batterie**

Masse du pack batterie : 250 kg
Capacité calorifique isobare : $Cp = 1000$ J.kg$^{-1}$.K$^{-1}$

**Calcul préliminaire de puissance de chauffe de batterie**

Le bilan enthalpique sur le pack batterie permet de calculer la puissance requise dans le réacteur. La puissance utile qui doit être fournie par la réaction thermochimique et transportée en 10 minutes vers la batterie peut être déterminée par la relation (1) :

$$P_{chauffe\ batterie} = m*Cp*\Delta T/600 = 4,16\ kW_{th}\ (1),$$

où :

- $P_{chauffe}$ batterie désigne la puissance thermique nécessaire pour chauffer une batterie de 10°C en 10 minutes (kW$_{th}$) ;
- m représente la masse du pack batterie à réchauffer (kg) ;
- Cp représente la capacité calorifique isobare du pack batterie (J.kg$^{-1}$.K$^{-1}$) ;
- $\Delta T$ représente 10 K et correspond à la variation de température souhaitée, à savoir une augmentation de la température de 10°C (K).

**Réaction thermochimique exothermique**

La réaction thermochimique réversible utilisée est la réaction de l'hydratation de l'oxyde de magnésium :
$Mg(OH)_2 \leftrightarrow MgO + H_2O$
L'étape de décharge correspond à la réaction d'hydratation de l'oxyde de magnésium.
Inversement, l'étape de charge correspond à la réaction de déshydratation de l'hydroxyde de magnésium. En effet, lors de cette étape, l'oxyde de magnésium et l'eau sont régénérés.
La réaction d'hydratation de l'oxyde de magnésium est optimale entre 100 et 350°C à pression atmosphérique permettant ainsi de chauffer le fluide caloporteur aux alentours de 80°C.
Dans ce contexte, il est communément admis qu'un taux de conversion en charge et en décharge est identique et égal à 0,8. Il est alors possible de déterminer le pourcentage molaire des solides après chacune des étapes de charge et de décharge.
Ainsi, après 7 cycles de charge et de décharge, le pourcentage molaire de l'oxyde de magnésium est stabilisé à environ 17% et le pourcentage molaire de l'hydroxyde de magnésium est stabilisé à environ 83%.
Il est dès lors possible de calculer les masses de solides initialement présents avant les étapes de charge et de décharge en fonction du besoin en chauffage.

**Puissance thermique de l'hydratation de l'oxyde de magnésium**

La puissance thermique de la réaction thermochimique est calculée en sachant qu'elle doit non seulement fournir la puissance de chauffe du pack batterie mais aussi la puissance thermique nécessaire à la préchauffe des réactifs. En effet, la réaction d'hydratation de l'oxyde de magnésium étant optimale entre 100 et 350°C à pression atmosphérique, il est nécessaire de chauffer au préalable jusqu'à 100°C.
La puissance de préchauffe des réactifs peut être déterminée par la relation (2) :

$$P_{préchauffe\ réactifs} = (m_{solides}*Cp_{solides} + m_{eau}*Cp_{eau})*\Delta T/600 = 2,2\ kW_{th}\ (2),$$

où :

- $P_{préchauffe\ réactifs}$ désigne la puissance thermique nécessaire pour préchauffer les réactifs jusqu'à 100°C (kW$_{th}$) ;
- $m_{solides}$ représente la masse des solides engagés dans la réaction thermochimique d'hydratation (kg) ;

- $Cp_{solides}$ représente la capacité calorifique isobare des solides engagés dans la réaction thermochimique (J.kg$^{-1}$.K$^{-1}$) ;
- $\Delta T$ représente 100 K et correspond à la variation de température de 0 à 100°C (K).

Par conséquent, la puissance thermique de la réaction d'hydratation thermique est égale à 6,36 kW$_{th}$.

L'enthalpie de la réaction d'hydratation de l'oxyde de magnésium est de 41 kJ/mol à 100°C. Sur la base de ces valeurs, il est possible de déterminer les masses des solides initialement présents. Ainsi, pour l'étape de décharge, la masse de l'oxyde de magnésium est de 4,65 kg et la masse de l'hydroxyde de magnésium est de 1,35 kg.

Ainsi, pour extraire la puissance thermique de 4,16 kWth, en considérant une température de fluide caloporteur de 80°C, il est possible de déterminer le débit à assurer qui est de 0,1L/s.

Une chauffe du pack batterie de 10°C en 10 minutes est alors réalisée.

**Puissance thermique de la déshydratation de l'hydroxyde de magnésium**

Concernant l'étape de charge, la masse de l'oxyde de magnésium est de 0,93 kg et la masse de l'hydroxyde de magnésium est de 6,74 kg.

La puissance thermique nécessaire à apporter au réacteur pour l'étape de déshydratation de l'hydroxyde de magnésium peut être déterminée. En considérant une durée d'une heure et que l'étape se déroule à une température de 350°C, la puissance thermique est déterminée par la relation (3) :

$$P_{réacteur} = (m_{solides}*Cp_{solides}*\Delta T + X_{charge}*n_{réactif}*\Delta Hr)/3600 = 2,05 \ kW_{th} \ (3)$$

où :

- $P_{réacteur}$ désigne la puissance thermique nécessaire pour l'étape de déshydratation de l'hydroxyde de magnésium (kW$_{th}$) ;
- $m_{solides}$ représente la masse des solides engagés dans la réaction thermochimique (kg) ;
- $Cp_{solides}$ représente la capacité calorifique isobare des solides engagés dans la réaction thermochimique (J.kg$^{-1}$.K$^{-1}$) ;
- $\Delta T$ représente 350 K et correspond à la variation de température de 0 à 350°C ;
- $X_{charge}$ représente le taux de conversion (0,8) ;
- $n_{réactif}$ représente le nombre de mol en Mg(OH)$_2$ ;
- $\Delta Hr$ représente l'enthalpie de réaction (41 kJ/mol).

Ainsi, une régénération de l'oxyde de magnésium et de l'eau est réalisée en une heure.

**Revendications**

1.  Dispositif (1) de chauffage d'une batterie (2), destiné à être installé sur un véhicule automobile comprenant au moins un accumulateur métal-ion, comprenant :

    - ladite batterie (2) ;
    - au moins un réacteur (4) ;
    - au moins un circuit (5) transportant un fluide caloporteur,

    ledit circuit (5) comportant une première partie (51) traversant le réacteur (4) apte à réaliser un échange thermique avec ledit circuit (5), et une seconde partie (52) apte à réaliser un échange thermique avec la batterie (2), **caractérisé en ce que** ledit réacteur (4) comporte un premier réactif, choisi parmi MgO, CaO, BaO, CoO N$_2$, SO$_2$ CO et Mg, apte à réagir avec un second réactif selon une réaction thermochimique exothermique.

2.  Dispositif selon la revendication 1, **caractérisé en ce que** la réaction thermochimique est la réaction inverse d'une réaction choisie parmi la dissociation catalytique, la déshydratation d'hydroxyde, la décarbonatation de carbonate, la réaction de réduction, le réformage de la vapeur et la déshydrogénation d'hydrure métallique.

3.  Dispositif selon l'une quelconque des revendications 1 à 2, **caractérisé en ce que** le premier réactif est choisi parmi MgO, CaO, BaO, CoO et Mg, de préférence encore MgO.

4. Dispositif selon l'une quelconque des revendications précédentes, **caractérisé en ce que** le second réactif est choisi parmi $H_2O$, $CO_2$, $O_2$ et $H_2$, de préférence $H_2O$, $CO_2$, $O_2$, de préférence encore $H_2O$.

5. Dispositif selon l'une quelconque des revendications précédentes, **caractérisé en ce que** le réacteur comprend au moins un échangeur de chaleur (7).

6. Dispositif selon l'une quelconque des revendications précédentes, **caractérisé en ce que** ledit réacteur comprend au moins un moyen de chauffage (21).

7. Dispositif selon l'une quelconque des revendications précédentes, **caractérisé en ce qu'**il comporte en outre une pompe (6) apte à mettre en mouvement le fluide caloporteur.

8. Dispositif selon l'une quelconque des revendications précédentes, **caractérisé en ce que** le circuit (5) comporte une troisième partie (53) pour le chauffage d'un habitacle (3) de véhicule automobile.

**Patentansprüche**

1. Heizvorrichtung (1), die in einem Kraftfahrzeug eingebaut werden soll, für eine Batterie (2), die mindestens einen Metall-Ionen-Akku umfasst, umfassend:

   - die Batterie (2);
   - mindestens einen Reaktor (4);
   - mindestens einen Kreislauf (5), in dem ein Wärmeträgerfluid transportiert wird, wobei der Kreislauf (5) einen ersten Abschnitt (51), der durch den Reaktor (4) verläuft und in der Lage ist, für einen Wärmeaustausch mit dem Kreislauf (5) zu sorgen, und einen zweiten Abschnitt (52) aufweist, der in der Lage ist, für einen Wärmeaustausch mit der Batterie (2) zu sorgen, **dadurch gekennzeichnet, dass** der Reaktor (4) ein erstes Reaktionsmittel aufweist, ausgewählt aus MgO, CaO, BaO, CoO, $N_2$, $SO_2$, CO und Mg, das in der Lage ist, mit einem zweiten Reaktionsmittel in einer exothermen thermochemischen Reaktion zu reagieren.

2. Vorrichtung nach Anspruch 1, **dadurch gekennzeichnet, dass** die thermochemische Reaktion die umgekehrte Reaktion zu einer Reaktion ist, die ausgewählt ist aus katalytischer Dissoziation, Abspaltung von Wasser aus Hydroxiden, Entkarbonatisierung bei Carbonaten, Reduktionsreaktion, Dampfreformierung und Wasserstoffabspaltung aus Metallhydriden.

3. Vorrichtung nach Anspruch 1 oder 2, **dadurch gekennzeichnet, dass** das erste Reaktionsmittel ausgewählt ist aus MgO, CaO, BaO, CoO und Mg, noch bevorzugter MgO.

4. Vorrichtung nach einem der vorhergehenden Ansprüche, **dadurch gekennzeichnet, dass** das zweite Reaktionsmittel ausgewählt ist aus $H_2O$, $CO_2$, $O_2$ und $H_2$, vorzugsweise $H_2O$, $CO_2$, $O_2$, noch bevorzugter $H_2O$.

5. Vorrichtung nach einem der vorhergehenden Ansprüche, **dadurch gekennzeichnet, dass** der Reaktor mindestens einen Wärmetauscher (7) umfasst.

6. Vorrichtung nach einem der vorhergehenden Ansprüche, **dadurch gekennzeichnet, dass** der Reaktor mindestens ein Heizmittel (21) umfasst.

7. Vorrichtung nach einem der vorhergehenden Ansprüche, **dadurch gekennzeichnet, dass** sie ferner eine Pumpe (6) aufweist, die in der Lage ist, das Wärmeträgerfluid in Bewegung zu versetzen.

8. Vorrichtung nach einem der vorhergehenden Ansprüche, **dadurch gekennzeichnet, dass** der Kreislauf (5) einen dritten Abschnitt (53) zum Erwärmen einer Fahrgastzelle (3) des Kraftfahrzeugs aufweist.

**Claims**

1. Device (1) for heating a battery (2), intended to be installed on a motor vehicle, comprising at least one metal-ion accumulator, comprising:

   - said battery (2);
   - at least one reactor (4);
   - at least one circuit (5) transporting a heat-transfer fluid,
   - said circuit (5) comprising a first portion (51) passing through the reactor (4), capable of carrying out a heat exchange with said circuit (5), and a second portion (52) capable of carrying out a heat exchange with the battery (2), **characterized in that** said reactor (4) comprises a first reagent chosen from MgO, CaO, BaO, CoO, $N_2$, $SO_2$, CO and Mg, capable of reacting with a second reagent according to an exothermic thermochemical reaction.

2. Device according to Claim 1, **characterized in that** the thermochemical reaction is the reverse reaction of a reaction chosen from catalytic dissociation, hydroxide dehydration, carbonate decarbonation, reduction reaction, steam reforming and dehydrogenation of metal hydride.

3. Device according to either one of Claims 1 and 2, **characterized in that** the first reagent is chosen from MgO, CaO, BaO, CoO and Mg, more preferably MgO.

4. Device according to any one of the preceding claims, **characterized in that** the second reagent is chosen from $H_2O$, $CO_2$, $O_2$ and $H_2$, preferably $H_2O$, $CO_2$ and $O_2$, more preferably $H_2O$.

5. Device according to any one of the preceding claims, **characterized in that** the reactor comprises at least one heat exchanger (7).

6. Device according to any one of the preceding claims, **characterized in that** said reactor comprises at least one heating means (21).

7. Device according to any one of the preceding claims, **characterized in that** it also comprises a pump (6) capable of moving the heat-transfer fluid.

8. Device according to any one of the preceding claims, **characterized in that** the circuit (5) comprises a third portion (53) for heating a motor vehicle passenger compartment (3).

# FIG.1

# FIG.2

# FIG.3

# FIG.4

# FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0206875 A
- US 5964097 A
- CA 2815334
- US 7147071 B